# EUROPEAN PATENT APPLICATION

(11) **EP 3 933 282 A1**
(43) Date of publication of application: **05.01.2022**
(21) Application number: 20183684.8
(22) Date of filing: 02.07.2020
(51) Int. Cl.: F24D 10/00, F24D 19/10, F24F 11/61, F24F 11/86, F25B 49/02

(54) **LOAD MANAGEMENT OF A HEAT PUMP**

(71) Applicant: E.ON Sverige AB, 205 09 Malmö (SE)
(72) Inventor: Rosén, Per, 227 33 Lund (SE); Skogström, Jacob, 234 42 Lomma (SE); Carlström, Helen, 237 36 Bjärred (SE); Lindoff, Bengt, 237 35 Bjärred (SE)
(74) Representative: AWA Sweden AB

(57) **Abstract**

A method (1000) for load management of a heat pump (100) comprising a plurality of on/off compressors (102, 104, 106, 108, 110, 112), each on/off compressor (102, 104, 106, 108, 110, 112) being configured to deliver a fixed power output is presented. The method comprising: receiving (1002) a power output request indicating a requested power output (2) from the heat pump (100); based on the requested power output (2), setting (1004) a set of the plurality of on/off compressors (102, 104, 106, 108, 110, 112) in an on-mode (4) such that an actual power output (8) exceeds the requested power output (2); alternatingly switching (1006) at least one of the plurality of on/off compressors (102, 104, 106, 108, 110, 112) between an on mode (4) and an temporary off-mode (6) such that over time an average power output corresponding to the requested power output (2) is achieved; and during a cycle time period, changing the on/off compressor among the plurality of on/off compressors (102, 104, 106, 108, 110, 112) being switched between the on mode (4) and the temporary off-mode (6) such that a specific on/off compressor (102, 104, 106, 108, 110, 112) is switched a maximum of one time.

## Description

### Field of the invention

The present invention relates to heating and cooling, more particularly to a method for load management of a heat pump and to a control unit for a heat pump.

### Background art

Heat pumps are commonly used devices for providing heating and/or cooling to a building. The use of heat pumps is ever increasing as they usually allow an increase in heating/cooling system efficiency, which results in a decrease for instance in use of electricity for heating/cooling. This is naturally desirable not only in terms of reducing the environmental impact of the temperature regulation in a building but also in that it allows a maintained or even improved standard of indoor climate to a reduced cost for the end user.

Heat pumps are further becoming more frequently applied in district heating systems, which allows a reduction in the temperature/lesser temperature differential of the thermal fluid in distribution grids of the district heating system. Being able to reduce the temperature of the thermal fluid in distribution grids reduces the need for insulation thereof, reduces losses to the surrounding ground in which the grid is buried, simplifies and thus reduces the costs of installation of the grid. Heat pumps can be configured as dedicated heat pumps, as dedicated cooling machines or as reversible heat pumps that can change the direction of heat transfer in relation to the building to which it is associated.

Heat pumps are however relatively complex and requires control to ensure that the desired thermal power output is achieved while also taking into consideration how to avoid excessive wear on components of the heat pump.

### Summary of the invention

In view of that stated above, the object of the present disclosure is to provide a method for load management of a heat pump which solves at least some of the problems in prior art solutions and that facilitates improvements in the reliability and durability of heat pumps.

More specifically, there is provided according to the teachings herein a method for load management of at least one heat pump comprising a plurality of on/off compressors, each on/off compressor being configured to deliver a fixed power output. The method comprises:
- receiving a power output request indicating a requested power output from the heat pump;
- based on the requested power output, setting a set of the plurality of on/off compressors in an on-mode such that an actual power output exceeds the requested power output;
- alternatingly switching at least one of the plurality of on/off compressors between an on mode and an temporary off-mode such that over time an average power output corresponding to the requested power output is achieved; and
- during a cycle time period, changing the on/off compressor among the plurality of on/off compressors being switched between the on mode and the temporary off-mode such that a specific on/off compressor is switched a maximum of one time.

The load will thus be distributed among the on/off-compressors evenly over time, distributing the wear associated with switching between the on-mode and off-mode to all compressors which improves durability of a heat pump in which the method is applied. No compressor will be repeatedly switched between on- and off-mode, which facilitates providing a reduction in wear over time for the compressors.

The method may further comprise, upon an on/off compressor being switched between the on mode and the temporary off-mode, starting a pre-set timer and preventing a new switch between the on mode and the temporary off-mode for said on/off compressor until the pre-set timer expires. The on/off-compressors will thus not be subjected to rapid mode-changes between the on/off-mode which could cause excessive wear on the compressors.

The method may comprise setting the pre-set timer based on a type of on/off compressor for which the pre-set timer is set. For instance, if one or a number of compressors are more powerful, or more complex for other reasons, than the remaining compressors, it could be desired to distribute the mode-switching between on-mode and off-mode such that these aforementioned compressors are subjected to less mode-switching over time than the remaining compressors. Another example could be if the heat pump in which the method is applied is designed such that a number of compressors are more easily replaceable than other compressors of the heat pump, the load management could then be tailored accordingly, such that the compressors that are replaceable are subjected to more mode-switching, and thus more wear, than the remaining compressors.

The method may comprise selecting the next on/off compressor to be switched between the on mode and the temporary off-mode based on a time since the pre-set timer has expired. Thus, distributing the number of times each compressor is switched between the on mode and the temporary off-mode.

The method may comprise selecting a next on/off compressor to be set in the temporary off-mode based on a time passed since temporary off-mode ending for each of the plurality of on/off compressors.

The method may comprise selecting a next on/off compressor to be switched between the on mode and the temporary off-mode based on a time passed since a last switch between the on mode and the temporary off-mode for each of the plurality of on/off compressors.

The method may comprise selecting the next on/off compressor to be switched between the on mode and the temporary off-mode as the compressor having the longest time passed since last switch between the on mode and the temporary off-mode among the plurality of on/off compressors.

In a second aspect of the present disclosure, a control unit for a heat pump is provided. The heat pump comprising a plurality of on/off compressors, each on/off compressor being configured to deliver a fixed power output. The control unit comprises:
a control circuit being configured to receive a power output request indicating a requested power output from the heat pump;
the control circuit further being configured to execute:
   a mode setting function configured to, based on the requested power output, set a set of the plurality of on/off compressors in an on-mode such that an actual power output exceeds the requested power output,
   the mode setting function being further configured to alternatingly switching at least one of the plurality of on/off compressors between an on-mode and a temporary off-mode such that over time an average power output corresponding to the requested power output is achieved,
   the mode setting function being further configured to, during a cycle time period, changing the on/off compressor among the plurality of on/off compressors being switched between the on mode and the temporary off-mode such that a specific on/off compressor is switched a maximum of one time.

The above-mentioned features of the method according to the first aspect, when applicable, apply to this second aspect as well. In order to avoid undue repetition, reference is made to the above.

In a third aspect herein, a non-transitory computer readable recording medium is provided having stored thereon instructions for implementing the method for load management according to the first aspect, when executed on a device having processing capabilities.

According to a fourth aspect a heat pump arrangement is provided. The heat pump arrangement comprising a heat pump having a plurality of on/off compressors and a control unit according to the second aspect. Each on/off compressor of the heat pump being configured to deliver a fixed power output.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 discloses a flow chart of a method for load management.
Fig. 2a discloses a heat pump arranged to provide heat to a building.
Fig. 2b discloses a heat pump arranged to remove heat from a building.
Fig. 3 discloses a diagram of the on/off-mode for a plurality of on/off compressors according to one embodiment.
Fig. 4 discloses a diagram of the power output from a heat pump according to one embodiment.
Fig. 5 discloses a diagram of the on/off-mode for a plurality of on/off compressors according to one embodiment.
Fig. 6 discloses a diagram of the power output from a heat pump according to one embodiment.
Fig. 7 discloses a diagram of the on/off-mode for a plurality of on/off compressors according to one embodiment.
Fig. 8 discloses a schematic outline of a control unit according to one embodiment.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

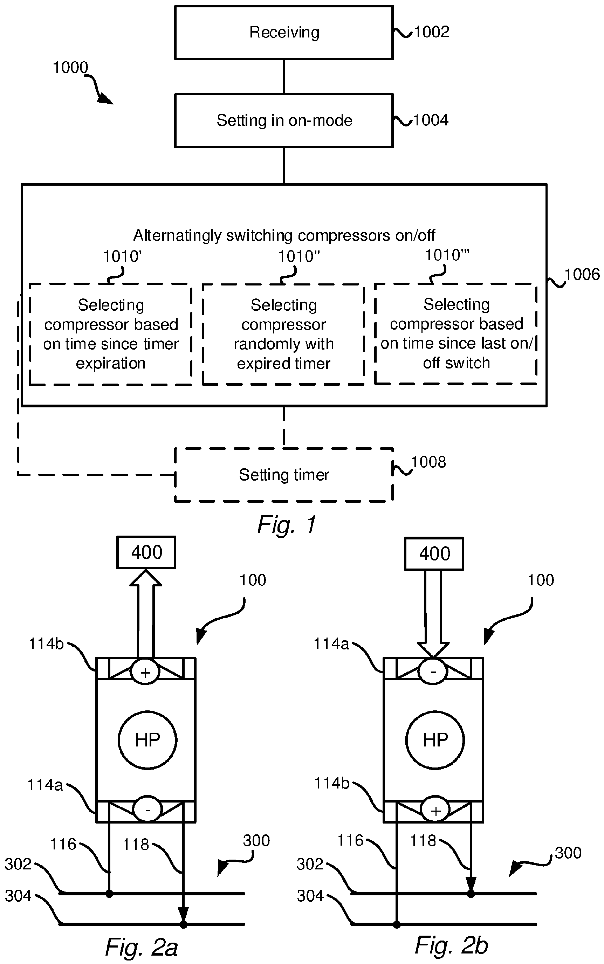

The teachings herein relate to a method 1000 for load management of a heat pump 100 as shown in Fig. 1. In the present disclosure, the term heat pump 100 is to be construed as a heat pump 100 configured to deposit or extract heat as shown in Figs. 2a and 2b, respectively. The heat pump 100 may be configured to deposit or extract heat to/from a building 400. The building 400 may be any type of building, such as a residential building, commercial or office building, an apartment building, a free-standing house or an industrial building.

The heat pump 100 may be configured to deposit or extract the heat to/from a thermal energy distribution grid 300. The thermal energy grid 300 may be a district heating grid or a district cooling grid known in the art. The district heating grid (or district cooling grid) may comprise a supply conduit providing heating (or cooling) medium from a thermal plant (not shown) and a return conduit which transport cooled heating medium (or heated cooling medium) to the thermal plant. The heating (or cooling) medium may be any fluid suitable for heating (or cooling) at the thermal plant and transported by means of the supply conduit and the return conduit, such as water. The heating (or cooling) medium will henceforth be referred to as "thermal fluid". The thermal plant may be a geothermal plant, an electrically powered plant for heating (or cooling) fluids, or may be driven by combustion of fuels, such as gas or oil. The thermal plant is configured to heat (or cool) the heating (or cooling) medium and pump it through the thermal energy distribution grid 300. For a district heating grid, the supply conduit is considered as a hot conduit 302 and the return conduit is considered as a cold conduit 304. For a district cooling grid, the supply conduit is considered as a cold conduit 304 and the return conduit is considered as a hot conduit 302.

As an alternative to being a district heating or district cooling grid, the thermal energy distribution grid 300 may be a combined district heating and cooling grid as previously disclosed in, e.g., WO 2017/076868 filed by E.ON Sverige AB. In such case, the hot and cold conduits 302 and 304 are not to be seen as supply and return conduits but instead to be seen as the hot conduit and the cold conduit 304 as disclosed in WO 2017/076868.

The teachings herein could be applied to a heat pump 100 as shown in Fig. 2a. The heat pump 100 shown in Fig. 2a comprises a heat extracting side 114a connected to the energy distribution grid 300 via heat pump inlet 102 connected to the hot conduit 302 of the energy distribution grid 300 and via a heat pump outlet 104 connected to the cold conduit 304 of the energy distribution grid 300.

The heat extracting side 114a, which preferably comprises an evaporator, thus removes heat from thermal fluid provided via the energy distribution grid 300 and further comprises a thermal depositing side 114b, preferably comprising a condenser, which deposits heat to the building 400. The amount of heat that is to be deposited thus translates to a thermal load which the heat pump 100 must meet.

The heat pump 100 shown in Fig. 2b is identical to that shown in Fig. 2a, however arranged in a reversed relationship to the thermal energy distribution grid 300. I.e. the heat pump 100 in Fig. 2b is configured to transfer heat from the building 400 to the thermal energy distribution grid 300. The heat pump inlet 116 is thus connected to the cold conduit 304 while the heat pump outlet 118 is connected to the hot conduit 118. The heat extracting side 114a is connected to the building 400, while the heat depositing side 114b is connected to the thermal energy distribution grid 300.

A heat pump 100 is a device considered to be known to a person skilled in the art, the functions of components thereof will thus not be explained in further detail unless necessary for the understanding of the teachings herein.

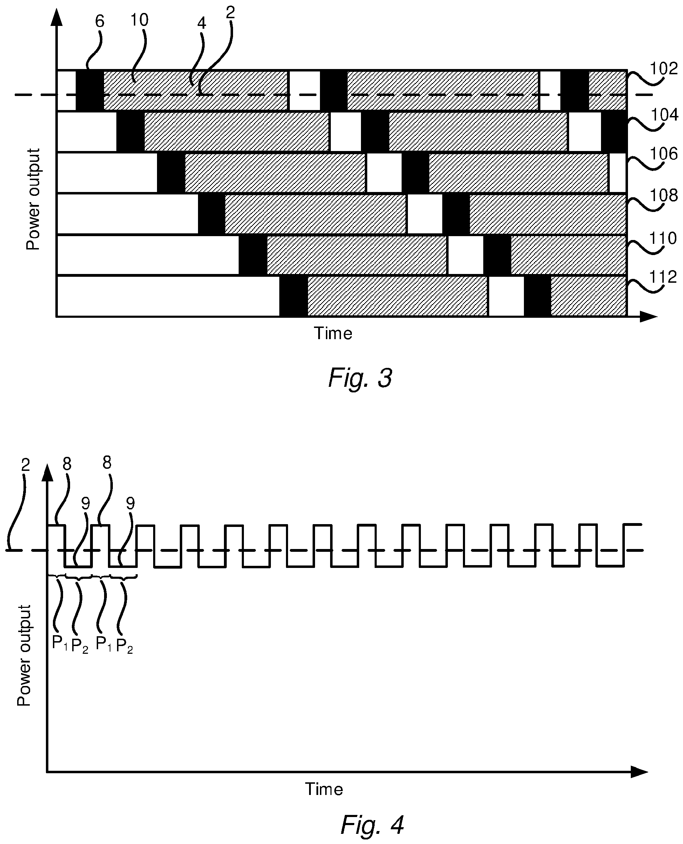

The heat pump 100 comprises a plurality of on/off compressors 102, 104, 106, 108, 110, 112 (schematically shown in e.g. Fig. 3) which can be controlled in an on/off manner in order to meet the thermal load which the heat pump 100 is subjected to. I.e. each compressor 102, 104, 106, 108, 110, 112 is configured to deliver a fixed respective power output.

The compressors 102, 104, 106, 108, 110, 112 are used to achieve desired pressure levels and phase changes of internal thermal fluid of the heat pump 100 between the heat extracting side 114a and the heat depositing side 114b thereof. The compressors 102, 104, 106, 108, 110, 112 constitute energy consuming devices and therefore should only as many compressors that is necessary for meeting a given thermal load be operated for any period of time.

The compressors 102, 104, 106, 108, 110, 112 are further considered to be components especially subject to wear and upon failure of a compressor, the heat pump 100 can no longer operate at its full potential, if at all. Each time a compressor 102, 104, 106, 108, 110, 112 is changed from its on-mode to its off-mode, or vice versa, a certain wear of the compressor can be attributed to the mode-change. Repeated switchings in close proximity in time between on/off-mode have proven especially detrimental to the compressors 102, 104, 106, 108, 110, 112 and such situations can be avoided by the teachings herein.

The method 1000 for load management schematically outlined in Fig. 1 thus provides a way of distributing the wear amongst the compressors 102, 104, 106, 108, 110, 112 of the heat pump 100 and for avoiding that one compressor is subjected to repeated and rapid switching between on/off-mode. With reference to Figs 1, 3-7 the method will below be discussed in more detail.

The method 1000 comprises receiving 1002 a power output request indicating a requested power output 2 from the heat pump 100. The requested power output 2 may comprise a desired temperature of thermal fluid that is to be delivered to a heating/cooling system of the building 400. Typically, the heat pump 100 deposits/extracts heat to/from a fluid based heating or cooling system of the building 400 having thermal fluid being fluidly separated from the internal thermal fluid of the heat pump 100 and of the thermal fluid of the thermal energy distribution grid 300. The heating/cooling system of the building 400 calls for a certain temperature of the thermal fluid from the heat pump 100 which then translates to the requested power output 2 for the heat pump 100 which can be controlled by means of feedback control.

The method further comprises, based on the requested power output 2, setting 1004 a set of the plurality of on/off compressors 102, 104, 106, 108, 110, 112 in an on-mode 4 such that a first temporary power output 8 exceeds the requested power output 2. The set of the plurality of on/off compressors 102, 104, 106, 108, 110, 112 can thus comprise all of the compressors 102, 104, 106, 108, 110, 112 of the heat pump 100 or a smaller number of the plurality of compressors 102, 104, 106, 108, 110, 112 depending on the requested power output 2. The sum of the power outputs from the set of the plurality of on/off compressors 102, 104, 106, 108, 110, 112 is thus higher than what is necessary for achieving the requested power output 2.

However, to avoid providing a power output that is over time higher than the requested power output 2, the method further comprises, for a first period of time P₁, maintaining the on/off compressors in the set of on/off compressors 102, 104, 106, 108, 110, 112 in the on-mode 4, and for a second period of time P₂, reducing the number of on/off compressors 102, 104, 106, 108, 110, 112 in the set of the plurality of on/off compressors 102, 104, 106, 108, 110, 112 being set in the on-mode 4 such that a second temporary power output 9 is achieved. The second temporary power output 9 fall behind the requested power output 2. P₂ directly succeeding P₁. After P₂ the number of on/off compressors 102, 104, 106, 108, 110, 112 being set in the on-mode 4 is increased such that the first temporary power output 8 is again achieved. This scheme of switching at least one of the compressors 102, 104, 106, 108, 110, 112 off and thereafter on again is repeated such that over time an average power output corresponding to the requested power output 2 is achieved.

Hence, to avoid providing a power output that is over time higher than the requested power output 2, the method further comprises, , alternatingly switching 1006 at least one of the plurality of on/off compressors 102, 104, 106, 108, 110, 112 between the on-mode 4 and a temporary off-mode 6 such that over time an average power output corresponds to the requested power output 2.

To avoid that a same on/off compressor of the plurality of on/off compressors 102, 104, 106, 108, 110, 112 is switched between the on-mode 4 and an off-mode 6 all the time, the method further comprises, during a cycle time period, changing the on/off compressor among the plurality of on/off compressors 102, 104, 106, 108, 110, 112 being switched on/off such that a specific on/off compressor 102, 104, 106, 108, 110, 112 is switched on/off a maximum of one time. The cycle time period is at least longer than 2 times a sum of P₁ and P₂. Preferably the cycle time period is equal to or longer than the number of on/off compressors in the set of the plurality of on/off compressors 102, 104, 106, 108, 110, 112 times the sum of P₁ and P₂. The compressor 102, 104, 106, 108, 110, 112 which is on/off switched is thus varied, which distributes the wear from the switching between on/off-mode amongst the compressors 102, 104, 106, 108, 110, 112 of the heat pump 100.

Figs 3 and 4 show schematic diagrams of how the compressors 102, 104, 106, 108, 110, 112 of the heat pump 100 may be controlled. The requested power output 2 is illustrated by the dashed line. In the illustrated example all of the plurality of compressors 102, 104, 106, 108, 110, 112 are belonging to the set of compressors being set in the on mode in order to reach the first temporary power output 8 that exceeds the requested power output 2. The compressors 102, 104, 106, 108, 110, 112 are alternatingly switched on/off such that an average actual power output corresponds to the requested power output 2.

Fig. 3 illustrates the method 1000 applied to a heat pump 100 having compressors 102, 104, 106, 108, 110, 112 which all have the same power output. Under such circumstances, it is often desired to distribute the on/off-mode switching evenly among the compressors 102, 104, 106, 108, 110, 112. The method 1000 in Fig. 3 thus comprises selecting 1010'" the next on/off compressor 102, 104, 106, 108, 110, 112 to be switched between the on mode 4 and the temporary off-mode 6 based on a time passed since last switch between the on mode 4 and the temporary off-mode 6 for each of the plurality of on/off compressors. Each compressor 102, 104, 106, 108, 110, 112 will consequently over time experience the same amount of on/off-mode switching and thus be subject to the same amount of wear related to this. The heat pump 100 will thus be more reliable as no one compressor 102, 104, 106, 108, 110, 112 is subject to a larger wear due to on/off switching than any other compressor.

Each time an on/off compressor 102, 104, 106, 108, 110, 112 is to be on/off switched, it may be selected 1010", among the plurality of on/off compressors, as the compressor 102, 104, 106, 108, 110, 112 having the longest time passed since its last on/off switching.

In one embodiment, also illustrated in Fig. 3, the method 1000 comprises setting 1008 a pre-set timer 10 preventing a new on/off switch for the on/off compressor 102, 104, 106, 108, 110, 112 until the pre-set timer 10 expires. The timer 10 may start upon the on/off compressor 102, 104, 106, 108, 110, 112 being switched between the on mode 4 and the temporary off-mode 6. Alternatively, the timer 10 may start upon the on/off compressor 102, 104, 106, 108, 110, 112 being switched between the temporary off-mode 6 and the on mode 4. The timer 10 may be set such that each compressor 102, 104, 106, 108, 110, 112 is prevented from being on/off switched before every other compressor is on/off switched once. I.e., the timer 10 may be dependent on the number of compressors and the intervals with which the compressors 102, 104, 106, 108, 110, 112 are to be set in the temporary off-mode 6.

The next on/off compressor 102, 104, 106, 108, 110, 112 to be switched between the on mode (4) and the temporary off-mode (6) can then be selected 1010' based on a time since the pre-set timer 10 has expired. Preferably, the on/off compressor 102, 104, 106, 108, 110, 112 having the longest time passed since timer 10 expiry among the plurality of on/off compressors 102, 104, 106, 108, 110, 112 is selected 1010' as the next compressor 102, 104, 106, 108, 110, 112 to be switched between the on mode (4) and the temporary off-mode (6). However, in a scenario where no compressor 102, 104, 106, 108, 110, 112 has an expired timer 10, the method 1000 may comprise selecting the compressor 102, 104, 106, 108, 110, 112 having the shortest time remaining until expiry of the timer 10.

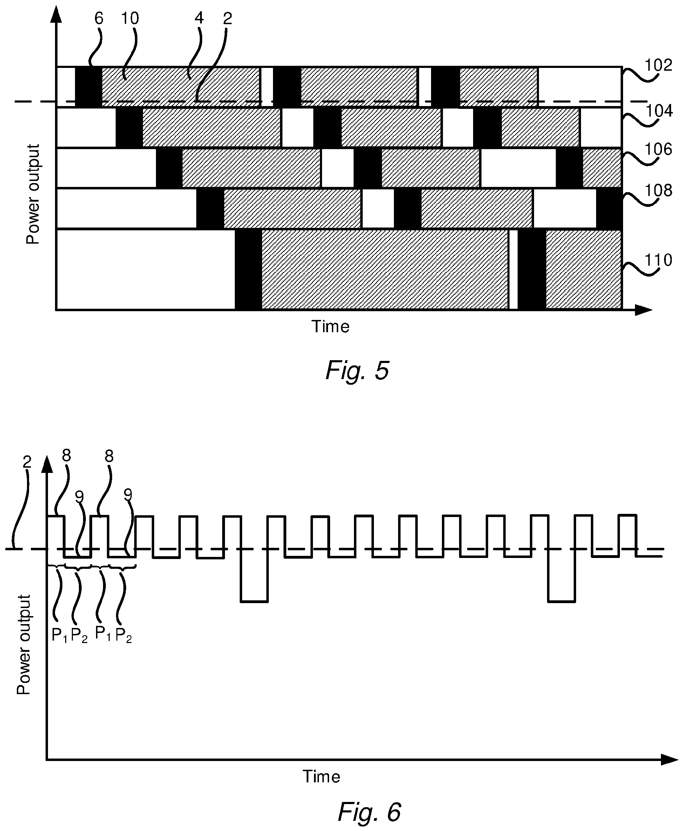

Figs 5 and 6 show schematic diagrams of how the compressors 102, 104, 106, 108, 110, 112 of the heat pump 100 may be alternatively controlled. Fig. 5 more particularly shows how each compressor 102, 104, 106, 108, 110, 112 is set in temporary off-mode 6 over time and Fig. 6 shows how the actual power output from the heat pump 100 varies over time.

In Figs 5 and 6, the method 1000 is applied to a heat pump 100 having on/off compressors 102, 104, 106, 108, 110, 112 with varying power output such that not all on/off compressors 102, 104, 106, 108, 110, 112 provide equal fixed power output.

As illustrated in Fig. 5, one compressor 110 provides a fixed power output being essentially double that of the other compressors 102, 104, 106, 108 of the heat pump 100. Other variations of the relative power output of the on/off compressors 102, 104, 106, 108, 110, 112 is naturally also possible.

In the embodiment shown in Figs 5 and 6, the method 1000 further comprises setting 1008 the pre-set timer 10, which prevents switching between the on mode 4 and the temporary off-mode 6, based on a type of the on/off compressor 102, 104, 106, 108, 110, 112 for which the pre-set timer 10 is set 1008. The timer 10 can thus be set individually for each compressor 102, 104, 106, 108, 110, 112, which allows adaptation of the wear for instance if it is desired to avoid wear for one compressor more than for other compressors.

In the embodiment illustrated in Fig. 5, one compressor 110 has a larger power output than the remaining compressors 102, 104, 106, 108. This compressor 110 can accordingly have the timer 10 set for a longer time period after each switch between the on mode 4 and the temporary off-mode 6 which will over time reduce wear for this compressor 110. This could be beneficial to avoid having to replace the most crucial compressor 110 for the heat pump 100 or facilitate distribution of wear to compressors 102, 104, 106, 108 that are easy to replace in the heat pump 100 when they fail.

It is further considered that a similar effect could be achieved, in an embodiment of the method 1000 in which no timer 10 is used, by selecting 1010'" a next on/off compressor 102, 104, 106, 108, 110, 112 to be switched between the on mode 4 and the temporary off-mode 6 based on a time passed since last switch between the on mode 4 and the temporary off-mode 6 for each of the plurality of on/off compressors where also the type of on/off compressor 102, 104, 106, 108, 110, 112 is considered. I.e. for the compressor 110 having a larger power output it could be required that a longer time period is needed before the next switch between the on mode 4 and the temporary off-mode 6, thus reducing the number of times that such a compressor 110 is on/off switched over time.

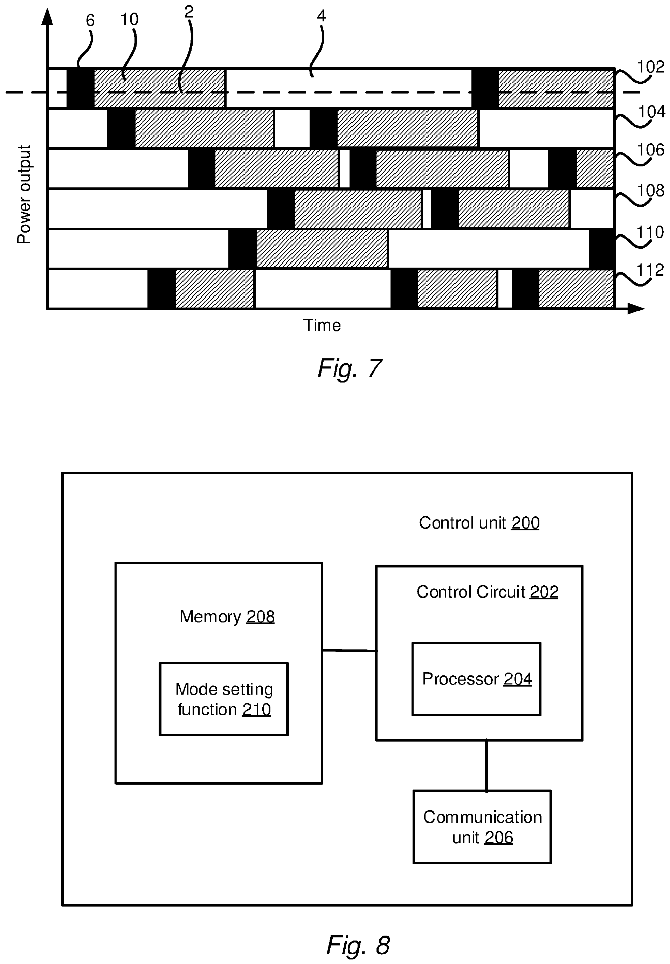

Fig. 7 shows a schematic diagram of how the compressors 102, 104, 106, 108, 110, 112 of the heat pump 100 may alternatively be controlled, in which a next on/off compressor 102, 104, 106, 108, 110, 112 to be switched between the on mode 4 and the temporary off-mode 6 is selected by randomly selecting 1010" an on/off compressor 102, 104, 106, 108, 110, 112 among the on/off compressors 102, 104, 106, 108, 110, 112 which pre-set timers 10 have expired. Overtime, each compressor 102, 104, 106, 108, 110, 112 will be switched between the on mode 4 and the temporary off-mode 6 essentially the same number of times thus distributing the wear evenly.

As mentioned in relation to Fig. 5, the pre-set timer 10 could be set 1008 based on a type of the on/off compressor 102, 104, 106, 108, 110, 112 for which the pre-set timer 10 is set 1008. The method 1000 would in such an embodiment thus prevent randomly selecting 1010" a certain compressor 102, 104, 106, 108, 110, 112 for which the timer 10 has not yet expired, which facilitates controlling the distribution of the number of times each compressor 102, 104, 106, 108, 110, 112 is on/off switched.

It is to be realized that while the method 1000 is illustrated in Figures 3 to 7 in scenarios where the at least one heat pump 100 is under a load that is near its full capacity, the method 1000 is equally applicable during low load scenarios as well. For instance, when the at least one heat pump 100 is exerted to a thermal load that only requires a power output equal to or less than that of one compressor 102, 104, 106, 108, 110, 112, the active compressor 102, 104, 106, 108, 110, 112, i.e. the compressor set in the on-mode 4, would change with each temporary off-mode 6 switching. The method 1000 disclosed herein would thus prevent the same compressor 102, 104, 106, 108, 110, 112 to repeatedly be turned on and off which could cause excessive wear under low load scenarios.

Turning now to Fig. 8 in which a control unit 200 for a heat pump 100 is shown. The control unit 200 may be formed by a single unit being configured to carry out overall control of functions and operations of the heat pump 100, more particularly the method 1000 disclosed herein. The control unit 200 may thus comprise a control circuit 202 which may be associated with a memory 208. The control circuit 202 may include an associated processor 204, such as a central processing unit (CPU), microcontroller, or microprocessor. The processor 204 is configured to execute program code stored in the memory 208, in order to carry out functions and operations of the control unit 200.

The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the control circuit 202. The memory 208 may exchange data with the control circuit 202 over a data bus. Accompanying control lines and an address bus between the memory 208 and the control circuit 202 also may be present.

The control unit 200 may further comprise a communication unit 206, connected to the control circuit 202 to facilitate remote control of functions and units of an associated heat pump 100. A unit of the heat pump 100 may be for instance a compressor 102, 104, 106, 108, 110, 112 thereof. The communication path over which the communication is made may be wired or wireless. The communication may include data transfers, and the like. Data transfers may include, but are not limited to, downloading and/or uploading data and receiving or sending messages. The data may be processed by the control unit 200. The processing may include storing the data in a memory, e.g. the memory 208 of the control unit 200, executing operations or functions, and so forth. The communication may be individual for each units of the respective assembly.

Functions and operations of the control unit 200 may be embodied in the form of executable logic routines (e.g., lines of code, software programs, etc.) that are stored on a non-transitory computer readable medium (e.g., the memory 208) of the control unit 200 and are executed by the control circuit 202 (e.g., using the processor 204). Furthermore, the functions and operations of the control unit 200 may be a stand-alone software application or form a part of a software application that carries out additional tasks related to the control unit 200. The described functions and operations may be considered a method that the corresponding device is configured to carry out.

Also, while the described functions and operations may be implemented in software, such functionality may as well be carried out via dedicated hardware or firmware, or some combination of hardware, firmware and/or software.

The control unit 200 is, as mentioned, associated with a heat pump 100 according to the teachings herein comprising a plurality of on/off compressors 102, 104, 106, 108, 110, 112, each on/off compressor 102, 104, 106, 108, 110, 112 being configured to deliver a fixed power output.

The control circuit 202 of the control unit 200 is configured to receive a power output request indicating a requested power output 2 from the heat pump 100. The power output request 2 may be received by the communication unit 206 and be indicative of a desired temperature of thermal fluid that is provided from the heat pump 100 to the building 400 to which the heat pump 100 is connected.

The control unit 200 further comprises a mode setting function 210. The mode setting function 210 may be executed by the control circuit 202. The mode setting function 210 being configured to, based on the requested power output 2, set a set of the plurality of on/off compressors 102, 104, 106, 108, 110, 112 in an on-mode 4 such that an actual power output exceeds the requested power output 2.

The mode setting function 210 being further configured to alternatingly switching at least one of the plurality of on/off compressors 102, 104, 106, 108, 110, 112 between an on-mode 4 and a temporary off-mode 6 such that over time an average power output corresponding to the requested power output 2 is achieved. The mode setting function 210 being further configured to, during a cycle time period, changing the on/off compressor 102, 104, 106, 108, 110, 112 among the plurality of on/off compressors 102, 104, 106, 108, 110, 112 being switched between the on mode 4 and the temporary off-mode 6 such that a specific on/off compressor 102, 104, 106, 108, 110, 112 is switched a maximum of one time.

The control unit 200 is thus configured to control one or more heat pumps 100 in order to perform the method 1000 disclosed herein. Hence, the mode setting function 210 may be configured to perform one or more of the method steps discussed above.

The person skilled in the art realizes that the present invention by no means is limited to the preferred embodiments described above. On the contrary, many modifications and variations are possible within the scope of the appended claims.

For example, the heat pump 100 may be configured to work with a fluid in the form of air on either side thereof.

Further, the heat pumps of Figs 2a and 2b are illustrated as a single device. Hence, a heat pump to be controlled in accordance with the present invention may be such a single device heat pump comprising a plurality of on/off compressors. However, a heat pump being distributed over a plurality of devices, wherein each device comprises one or more on/off compressors may equally well be controlled in accordance with the present invention.

Additionally, variations to the disclosed embodiments can be understood and effected by the skilled person in practicing the claimed invention, from a study of the drawings, the disclosure, and the appended claims.

## Claims

1. A method (1000) for load management of a heat pump (100) comprising a plurality of on/off compressors (102, 104, 106, 108, 110, 112), each on/off compressor (102, 104, 106, 108, 110, 112) being configured to deliver a fixed power output, the method comprising:
receiving (1002) a power output request indicating a requested power output (2) from the heat pump (100);
based on the requested power output (2), setting (1004) a set of the plurality of on/off compressors (102, 104, 106, 108, 110, 112) in an on-mode (4) such that an actual power output (8) exceeds the requested power output (2);
alternatingly switching (1006) at least one of the plurality of on/off compressors (102, 104, 106, 108, 110, 112) between an on mode (4) and an temporary off-mode (6) such that over time an average power output corresponding to the requested power output (2) is achieved; and
during a cycle time period, changing the on/off compressor among the plurality of on/off compressors (102, 104, 106, 108, 110, 112) being switched between the on mode (4) and the temporary off-mode (6) such that a specific on/off compressor (102, 104, 106, 108, 110, 112) is switched a maximum of one time.

2. The method (1000) for load management according to claim 1, further comprising selecting (1010''') a next on/off compressor (102, 104, 106, 108, 110, 112) to be switched between the on mode (4) and the temporary off-mode (6) based on a time passed since a last switch between the on mode (4) and the temporary off-mode (6) for each of the plurality of on/off compressors.

3. The method (1000) for load management according to claim 1 or 2, further comprising, upon an on/off compressor (102, 104, 106, 108, 110, 112) being switched between the on mode (4) and the temporary off-mode (6), starting (1008) a pre-set timer (10) and preventing a new switch between the on mode (4) and the temporary off-mode (6) for said on/off compressor (102, 104, 106, 108, 110, 112) until the pre-set timer (10) expires.

4. The method (1000) for load management according to claim 3, further comprising setting (1008) the pre-set timer (10) based on a type of on/off compressor (102, 104, 106, 108, 110, 112) for which the pre-set timer (10) is set (1008).

5. The method (1000) for load management according to claim 3 or 4, further comprising selecting (1010') the next on/off compressor (102, 104, 106, 108, 110, 112) to be switched between the on mode (4) and the temporary off-mode (6) based on a time since the pre-set timer (10) has expired.

6. The method for load management according to any one of claims 3 to 5, further comprising selecting (1010") a next on/off compressor (102, 104, 106, 108, 110, 112) to be switched between the on mode (4) and the off-mode (6) by randomly selecting (1010") an on/off compressor (102, 104, 106, 108, 110, 112) among the on/off compressors (102, 104, 106, 108, 110, 112) which pre-set timers (10) have expired.

7. The method (1000) for load management according to claim 2, further comprising selecting (1010''') the next on/off compressor (102, 104, 106, 108, 110, 112) to be switched between the on mode (4) and the temporary off-mode (6) as the compressor (102, 104, 106, 108, 110, 112) having the longest time passed since last switch between the on mode (4) and the temporary off-mode (6) among the plurality of on/off compressors.

8. A non-transitory computer readable recording medium (208) having stored thereon instructions for implementing the method (1000) for load management according to any one of claim 1 to 7, when executed on a device having processing capabilities.

9. A control unit (200) for a heat pump (100), the heat pump (100) comprising a plurality of on/off compressors (102, 104, 106, 108, 110, 112), each on/off compressor (102, 104, 106, 108, 110, 112) being configured to deliver a fixed power output, the control unit (100) comprising:
a control circuit (202) being configured to receive a power output request indicating a requested power output (2) from the heat pump (100),
the control circuit (202) further being configured to execute:
a mode setting function (210) configured to, based on the requested power output (2), set a set of the plurality of on/off compressors (102, 104, 106, 108, 110, 112) in an on-mode (4) such that an actual power output exceeds the requested power output (2),
the mode setting function (210) being further configured to alternatingly switching at least one of the plurality of on/off compressors (102, 104, 106, 108, 110, 112) between an on-mode (4) and a temporary off-mode (6) such that over time an average power output corresponding to the requested power output (2) is achieved,
the mode setting function (210) being further configured to, during a cycle time period, changing the on/off compressor (102, 104, 106, 108, 110, 112) among the plurality of on/off compressors (102, 104, 106, 108, 110, 112) being switched between the on mode (4) and the temporary off-mode (6) such that a specific on/off compressor (102, 104, 106, 108, 110, 112) is switched a maximum of one time.

10. A heat pump arrangement comprising:
a heat pump (100) having a plurality of on/off compressors (102, 104, 106, 108, 110, 112), each on/off compressor (102, 104, 106, 108, 110, 112) being configured to deliver a fixed power output; and
a control unit (200) according to claim 9.
